# EUROPEAN PATENT APPLICATION

(11) **EP 3 299 857 A1**
(43) Date of publication of application: **28.03.2018**
(21) Application number: 16189958.8
(22) Date of filing: 21.09.2016
(51) Int. Cl.: G02B 6/32, G02B 6/38

(54) **FIBER-OPTICAL SUBSEA CONNECTOR**

(71) Applicant: Siemens Aktiengesellschaft, 80333 München (DE)
(72) Inventor: Villmark, Trond Holger, 3617 Kongsberg (NO)

(57) **Abstract**

The present invention relates to a fiber-optical subsea connector (10). The fiber-optical subsea connector (10) comprises a transparent rod-shaped element (17) extending in a longitudinal direction from a first end (18) to a second end (19), and an optical lens (16) arranged at the first end (18) of the rod-shaped element (17) to modify light propagation through the rod-shaped element (17). A first optical surface of the optical lens (16) is facing the first end (18) of the rod-shaped element (17) and a second optical surface of the optical lens (16) opposing the first optical surface is coupleable to an optical fiber (12).

## Description

The present invention relates to a fiber-optical connector for use in subsea environment, in particular to a wet-mateable fiber-optical subsea connector.

In subsea applications, for example subsea oil production, data communication demand is increasing for controlling and monitoring subsea equipment. The increasing data communication demand may be met by fiber-optical data communication. An optical data communication signal may be transmitted via a single mode or a multimode optical fiber cable. An optical fiber cable, or simply optical fiber, includes a transparent core surrounded by a transparent cladding material with a lower index of refraction. Light is kept in the core by the total internal reflection which causes the fiber to act as a waveguide. The core as well as the cladding may be made of glass with different indices of refraction. The optical signal is transmitted in the glass core of the fiber cable and the diameter of the core may be in a range of a few micrometres, for example the diameter of the core may be 9 micrometer.

In a fiber-optical connector, where fiber meets fiber, the fibers are held within ferrules for aligning the fiber ends. Due to the small diameter of the fiber core, a connection of fiber to fiber is very sensitive to dust and particles. This is in particular a problem for wet-mateable connectors due to the internal oil in the connector. Even if the oil fulfils the cleanliness standards specified for the connector, for example NAS class 4, the oil may contain particles larger than 9 micrometer, which may block the signal. If the signal is blocked or degraded by particles in a wet-mateable connector, the connector has to be opened and cleaned manually. This requires that the oil has to be removed from the connector and the connector has to be disassembled and the ferrule has to be cleaned manually. This is a time-consuming work and includes a high risk for introducing new particles into the connector. Furthermore, in case a fiber to fiber connection is disturbed by dust or particles when being arranged subsea, it may not be possible to do the cleaning and in this situation the failing line may be lost or a lot of equipment has to be retrieved from subsea.

Therefore, it is an object of the present invention to provide a fiber-optical subsea connector which provides a more reliable fiber to fiber connection.

According to the present invention, this object is achieved by a fiber-optical subsea connector as defined in claim 1 and a fiber-optical subsea connector system as defined in claim 13. The dependent claims define embodiments of the invention.

According to an embodiment, a fiber-optical subsea connector is provided. The fiber-optical subsea connector comprises a transparent rod-shaped element extending in a longitudinal direction from a first end to an opposing second end, and an optical lens arranged at the first end of the rod-shaped element. The optical lens is used to modify light propagating through the rod-shaped element. A first optical surface of the optical lens is facing the first end of the rod-shaped element, and a second optical surface of the optical lens opposing the first optical surface is coupleable to an optical fiber. The optical lens may be arranged such that an optical axis the optical lens is extending in the longitudinal direction of the rod-shaped element. The optical lens may comprise a converging lens or ball lens such that a light beam from the optical fiber is expanded to a larger diameter and transmitted through the rod-shaped element. Vice versa, a light beam transmitted through the rod-shaped element may be focused by the optical lens to a smaller diameter to be transmitted through the optical fiber.

When coupling a first optical fiber to a second optical fiber, the first optical fiber may be terminated at a first fiber-optical subsea connector as described above and the second optical fiber may be terminated at a second fiber-optical subsea connector as described above. Light from the first optical fiber is expanded to a larger diameter and is transmitted through the rod-shaped element of the first fiber-optical subsea connector and leaves the rod-shaped element at the second end. Light emitted from the second end of the rod-shaped element of the first fiber-optical subsea connector may be received at the second end of the rod-shaped element of the second fiber-optical subsea connector and focused by the optical lens into the second optical fiber. Due to the expanded light beam transmitted from the rod-shaped element of the first fiber-optical subsea connector to the rod-shaped element of the second fiber-optical subsea connector, this interface is less sensitive to dust and particles such that a more reliable transmission of optical communication signals may be provided.

According to an embodiment, the second end of the rod-shaped element comprises a planar surface. A surface normal of the planar surface of the second end of the rod shaped element is inclined with respect to the longitudinal direction of the rod-shaped element. An angle between the surface normal of the planar surface of the second end of the rod-shaped element and the longitudinal direction of the rod shaped element may be in a range of 6° to 10°. In particular, an angle between the surface normal of the planar surface of the second end of the rod-shaped element and the longitudinal direction of the rod-shaped element is 8°. The inclination of the planar surface of the rod shaped element reduces back reflection of light leaving the rod shaped element. Assuming that a mating fiber-optical subsea connector has the same inclination, also a very low insertion loss may be achieved.

According to another embodiment, the cross-sectional area of the rod-shaped element in a plane perpendicular to the longitudinal direction of the rod-shaped element is larger than a cross-sectional area of a core of the optical fiber. In particular, the cross-sectional area of the rod-shaped element in the plane perpendicular to the longitudinal direction of the rod-shaped element is at least 1000 times larger than the cross-sectional area of the core of the optical fiber. In other words, a diameter of the rod-shaped element may be much larger than a diameter of the core of the optical fiber. For example, the diameter of the rod-shaped element may be in a range of 0.7 to 1 mm, whereas a diameter of the fiber core may be 9 micrometres. Due to the large area at the interface where the rod-shaped element of one fiber-optical subsea connector interfaces another rod-shaped element of a mating fiber-optical subsea connector, this interface area is not very sensitive to particles and dust in oil and the fiber-optical subsea connector is therefore in particular suitable to be used as wet-mateable connector in subsea applications. However, the fiber-optical subsea connector is also applicable to be used as dry-mateable connector. Furthermore, due to the large area, this structure does not require small tolerances in manufacture.

According to another embodiment, the rod-shaped element comprises glass material. The glass material provides a low light attenuation and is resistant to oil in an wet-mateable subsea connector.

According to another embodiment, the fiber-optical subsea connector comprises a ferrule enclosing at least partially the rod-shaped element and the optical lens. The ferrule provides an opening for receiving the optical fiber. By including the fiber, the lens and the rod shaped element into the ferrule, the rod-shaped element may be reliably aligned with a rod-shaped element of a mating fiber-optical subsea connector and a reliable optical path from the optical fiber through the optical lens into the rod-shaped element may be provided.

According to another embodiment, the rod-shaped element and the optical lens are formed integrally. This may avoid a gap between the optical lens and the rod-shaped element such that a contact between the lens and the rod-shaped element is achieved which may reduce back reflection significantly. For example, the optical lens may be melted into the rod-shaped element or polished as a lens in the first end of the rod-shaped element.

In another embodiment, the fiber-optical subsea connector may comprise the optical fiber and the optical fiber is glued or melted to the second optical surface of the optical lens. This may provide a reliable interface between the optical fiber and the optical lens.

According to yet another embodiment, the fiber-optical subsea connector comprises furthermore a wet-mateable housing configured to selectively expose at least the second end of the rod-shaped element to another mating fiber-optical subsea connector. For example, when the wet-mateable housing of the fiber-optical subsea connector is not connected to the housing of the other mating fiber-optical subsea connector, the second end of the rod shaped element may be completely enclosed by the wet-mateable housing thus protecting the second end of the rod-shaped element from the environment, for example from seawater. However, when the wet-mateable housing of the fiber-optical subsea connector is coupled to the wet-mateable housing of the other mating fiber-optical subsea connector, the second end of the rod-shaped element is exposed such that it may interface with a second end of a rod-shaped element of the other mating fiber-optical subsea connector. Additionally, the wet-mateable housing of the fiber-optical subsea connector may be filled with oil to avoid ingress of seawater into the wet-mateable housing of the fiber-optical subsea connector.

According to another embodiment, a fiber-optical subsea connector system is provided. The fiber-optical subsea connector system comprises a first fiber-optical subsea connector as described above and a second fiber-optical subsea connector as described above. The wet-mateable housing of the first fiber-optical subsea connector is configured to be coupled to the wet-mateable housing of the second fiber-optical subsea connector under wet subsea conditions. In other words, the wet-mateable housings of the first and second fiber-optical subsea connectors may be coupled to each other while being submerged, for example in a depth of several hundreds or even some thousands metres. When the first fiber-optical subsea connector is coupled to the second fiber-optical subsea connector, the exposed second end of the rod-shaped element of the first fiber-optical subsea connector faces the exposed second end of the rod-shaped element of the second fiber-optical subsea connector. Therefore, the fiber-optical subsea connector system may be installed in subsea environments and may provide a reliable optical data communication even in case some particles are arranged at the interface between the second ends of the rod-shaped elements.

When the first fiber-optical subsea connector is coupled to the second fiber-optical subsea connector, the longitudinal direction of the rod-shaped element of the first fiber-optical subsea connector is aligned to the longitudinal direction of the rod shaped element of the second fiber-optical subsea connector. This may be achieved by the ferrules enclosing the rod-shaped elements within the wet-mateable housings of the first and second fiber-optical subsea connectors. Aligning the rod-shaped elements of the first and second fiber-optical subsea connectors provides a low insertion loss.

Although specific features described in the above summary and the following detailed description are described in connection with specific embodiments and aspects of the present invention, it should be understood that the features of the exemplary embodiments and aspects may be combined with each other unless specifically noted otherwise.

### Brief description of the drawings

The present invention will now be described in more detail with reference to the accompanying drawings.
Figure 1 shows schematically a fiber-optical subsea connector according to an embodiment of the present invention.
Figure 2 shows schematically a fiber-optical subsea connector system according to an embodiment of the present invention.

### Detailed description of preferred embodiments

In the following, exemplary embodiments of the invention will be described in more detail. It is to be understood that the features of the various exemplary embodiments described herein may be combined with each other unless specifically noted otherwise. Same reference signs in the various drawings refer to similar or identical components.

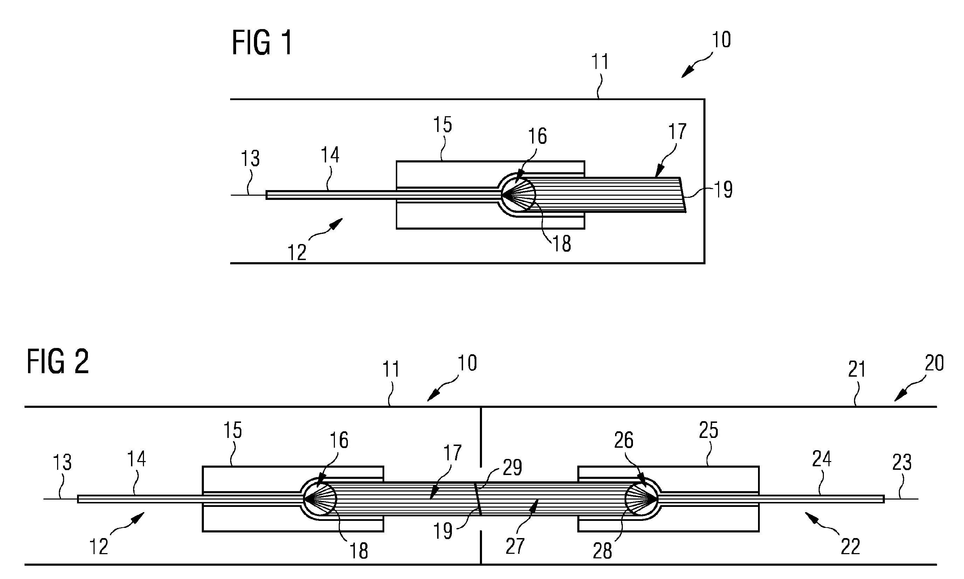

Figure 1 shows schematically a fiber-optical subsea connector 10 comprising a wet-mateable housing 11 for connecting an optical fiber 12 to another optical fiber which is not shown in Figure 1. The optical fiber 12 comprises a fiber core 13 and a cladding 14. The fiber core 13 may have a diameter of a few micrometers, for example 9 micrometer. Therefore, an optical data communication signal is communicated within the fiber core 13 with a considerably high light density. The optical fiber 12 is terminated within a ferrule 15 at an optical lens 16. The optical lens 16 may comprise a ball lens as shown in Figure 1 or any other kind of converging lens. The optical lens 16 is coupled to a first end 18 of a transparent rod-shaped element 17. A length of the rod-shaped element 17 may be up to several centimeters, for example 2.5 cm. A diameter of the transparent rod-shaped element may be in a range of 0.7 to 1 mm. The cross-sectional shape of the rod-shaped element may be circular or square. The optical lens 16 may be melted into the first end 18 of the rod-shaped element 17, or the optical lens 16 may be formed integrally with the rod shaped element 17 by polishing the lens into the first end 18 of the rod-shaped element 17. The optical lens 17 modifies a light beam from the fiber core 13 such that it is expanded to essentially the whole cross-sectional area of the rod-shaped element 17. Consequently, the optical lens 16 focuses a light beam from the whole cross-sectional area of the rod shaped element 17 into the fiber core 13. The ferrule 15 supports the optical fiber 12, the optical lens 16 and the rod shaped element 17. A second end 19 of the rod-shaped element 17 is an essentially planar surface which is inclined with respect to the longitudinal axis of the rod-shaped element 17. An inclination angle of a surface normal of the second end 19 with respect to the longitudinal direction of the rod-shaped element 17 may be in a range of 6° to 10°, preferably 8°.

The housing 11 is a wet-mateable housing which may completely enclose and protect the rod-shaped element 17 from the environment as long as the wet-mateable housing 11 is not coupled to another mating wet-mateable housing. During coupling the wet-mateable housing 11 to the other mating wet-mateable housing at least the second end 19 of the rod-shaped element 17 is exposed, for example by opening a cover (not shown) of the wet-mateable housing 11.

Figure 2 shows schematically a fiber-optical subsea connector system comprising a first fiber-optical subsea connector 10 and a second fiber-optical subsea connector 20 in a connected state. The first fiber-optical subsea connector 10 corresponds essentially to the fiber-optical connector 10 explained above in connection with Figure 1.

The second fiber-optical subsea connector 20 has also the same structure as the fiber-optical subsea connector 10 described above in connection with Figure 1. In detail, the second fiber-optical subsea connector 20 comprises a wet-mateable housing 21 and a ferrule 25 supporting an optical lens 26 coupled to a first end 28 of a transparent rod-shaped element 27, and an optical fiber 22 comprising a fiber core 23 and a cladding 24. As described above, the optical fiber 22 is coupled to the lens 26 and the lens 26 is coupled to the first end 28 of the transparent rod-shaped element 27. A second end 29 of the rod-shaped element 27 is inclined with essentially the same angle of inclination as the second end 19 of the transparent rod-shaped element 17 of the first fiber-optical subsea connector 10. Thus, the second ends 19 and 29 may be arranged facing each other when the wet-mateable housing 11 of the first fiber-optical subsea connector 10 is coupled to the wet-mateable housing 21 of the second fiber-optical subsea connector 20.

The above-described fiber-optical subsea connector system transmits the optical communication signal on a light beam at the interface between the second ends 19 and 29 of the rod-shaped elements 17 and 27, thus that dust and particles at this interface do not influence the optical communication signal significantly. Furthermore, due to the inclined interface plane, a low back reflection is achieved. Furthermore, this very rugged design is suitable to be used in an wet mate subsea connector connecting the fibers 12 and 22 on the seabed. However, the above-described fiber-optical subsea connector system may also be used in a dry mate subsea connector for connecting the fibers 12 and 22 in harsh environments, in particular in subsea applications.

## Claims

1. A fiber-optical subsea connector, comprising:
- a transparent rod-shaped element (17) extending in a longitudinal direction from a first end (18) to an opposing second end (19), and
- an optical lens (16) arranged at the first end (18) of the rod-shaped element (17) to modify light propagating through the rod-shaped element (17),
wherein a first optical surface of the optical lens (16)is facing the first end (18) of the rod-shaped element (17), wherein a second optical surface of the optical lens (16) opposing the first optical surface is coupleable to an optical fiber (12).

2. The fiber-optical subsea connector according to claim 1, wherein the second end (19) of the rod-shaped element (17) comprises a planar surface, wherein a surface normal of the planar surface of the second end (19) of the rod-shaped element is inclined with respect to the longitudinal direction of the rod-shaped element (17).

3. The fiber-optical subsea connector according to claim 2, wherein an angle between the surface normal of the planar surface of the second end (19) of the rod-shaped element (17) and the longitudinal direction of the rod-shaped element (17) is in a range of 6 to 10 degrees.

4. The fiber-optical subsea connector according to claim 2, wherein an angle between the surface normal of the planar surface of the second end (19) of the rod-shaped element (17) and the longitudinal direction of the rod-shaped element (17) is 8 degrees.

5. The fiber-optical subsea connector according to any one of the preceding claims, wherein a cross-sectional area of the rod-shaped element (17) in a plane perpendicular to the longitudinal direction of the rod-shaped element (17) is larger than a cross-sectional area of a core of the optical fiber (12).

6. The fiber-optical subsea connector according to any one of the preceding claims, wherein the cross-sectional area of the rod-shaped element (17) in a plane perpendicular to the longitudinal direction of the rod-shaped element (17) is at least 1000 times larger than the cross-sectional area of the core of the optical fiber (12).

7. The fiber-optical subsea connector according to any one of the preceding claims, wherein the optical lens (16) is a converging lens.

8. The fiber-optical subsea connector according to any one of the preceding claims, wherein the rod-shaped element (17) comprises glass material.

9. The fiber-optical subsea connector according to any one of the preceding claims, further comprising a ferrule (15) enclosing at least partially the rod-shaped element (17) and the optical lens (16), wherein the ferrule (15) provides an opening for receiving the optical fiber (12).

10. The fiber-optical subsea connector according to any one of the preceding claims, wherein the rod-shaped element (17) and the optical lens (16) are formed integrally.

11. The fiber-optical subsea connector according to any one of the preceding claims, wherein the optical fiber (12) is glued or melted to the second optical surface of the optical lens (16).

12. The fiber-optical subsea connector according to any one of the preceding claims, further comprising a wet-mateable housing (11) configured to selectively expose at least the second end (19) of the rod-shaped element (17) to another mating fiber-optical subsea connector (20).

13. A fiber-optical subsea connector system, comprising:
- a first fiber-optical subsea connector (10) according to claim 12, and
- a second fiber-optical subsea connector (20) according to claim 12,
wherein the wet-mateable housing (11) of the first fiber-optical subsea connector (10) is configured to be coupled to the wet-mateable housing (21) of the second fiber-optical subsea connector (20) under wet subsea conditions, wherein, when the first fiber-optical subsea connector (10) is coupled to the second fiber-optical subsea connector (20), the exposed second end (19) of the rod-shaped element (17) of the first fiber-optical subsea connector (10) faces the exposed second end (29) of the rod-shaped element (27) of the second fiber-optical subsea connector (20).

14. The fiber-optical subsea connector system according to claim 13, wherein, when the first fiber-optical subsea connector (10) is coupled to the second fiber-optical subsea connector (20), the longitudinal direction of the rod-shaped element (17) of the first fiber-optical subsea connector (10) is aligned to the longitudinal direction of the rod-shaped element (27) of the second fiber-optical subsea connector (20) .
